# EUROPÄISCHE PATENTSCHRIFT

(11) **EP 0 782 898 B1**
(45) Veröffentlichungstag und Bekanntmachung des Hinweises auf die Patenterteilung: **28.11.2001**
(21) Anmeldenummer: 96120721.4
(22) Anmeldetag: 21.12.1996
(51) Int. Cl.: B23B 33/00

(54) **Verfahren zum Befestigen eines Spannaufsatzes auf einem Werkstück und Vorrichtung zu seiner Durchführung**
Method for fixing a clamping device on a workpiece and device for applying this method
Méthode de fixation d'un dispositif de serrage sur une pièce et dispositif pour mettre en oeuvre cette méthode

(30) Priorität: 08.01.1996 CH 4296
(43) Veröffentlichungstag der Anmeldung: 09.07.1997
(73) Patentinhaber: Forkardt Schweiz AG, 8307 Effretikon (CH)
(72) Erfinder: Bohler, Erwin, 9553 Bettwiesen (CH)
(74) Vertreter: Blum, Rudolf Emil Ernst

(56) Entgegenhaltungen:
- FR-A- 2 175 995
- US-A- 1 506 035
- US-A- 2 407 908
- US-A- 3 344 695

## Beschreibung

Um bei präzisen Dreh- und Rundschleifarbeiten eine genaue Zentrierung einzuhalten wird das Werkstück nicht in das Spannfutter der Werkzeugmaschine, sondern zwischen Zentrier-Spitzen eingespannt, die seine Drehachse exakt festlegen. Da die Reibung zwischen den Spitzen und dem Werkstück nicht ausreicht, um dieses anzutreiben, wird das zur Bearbeitung nötige Drehmoment nicht direkt von der Werkzeugmaschine auf das Werkstück übertragen sondern indirekt, über einen in der Regel durch Kraftschluss auf dessen Aussenfläche befestigten Aufsatz. Dieser Aufsatz kann auf einfache Weise eingerichtet sein, um eine gewisse Exzentrizität zwischen der Achse des den Drehmoment erzeugenden Mechanismus und der Rotationsachse des Werkstückes zuzulassen, ohne wesentliche radiale Kräfte auf letzteres auszuüben. Traditionsgemäss besteht der Aufsatz meist aus einer einfachen Zange, dem sogenannten Dreh-Herz welches meist mittels einer oder mehreren radial gerichteten Schrauben auf dem Werkstück befestigt ist. Das US-Patent 2 407 908 zeigt andererseits ein Dreh-Herz, welches durch Anziehen einer tangentialen Schraube auf dem Werkstück festgeklemmt wird und das US-Patent 1 506 035 beschreibt ein besonders bequem zu befestigendes Dreh-Herz, bei welchem das von der Werkzeugmaschine übertragene Drehmoment zur Haltekraft beiträgt. Die Drehbewegung der Werkzeugmaschine wird auf das Dreh-Herz, und somit auf das Werkstück übertragen, indem ein mit der Spindel der Maschine rotierender Finger gegen einen achsentfernten Anschlag des Dreh-Herzes drückt und letzteres mitnimmt. Sofern der Finger leicht in radialer Richtung auf dem Anschlag hin und her rutschen kann, überträgt er sozusagen nur ein Drehmoment und praktisch keine radialen Kräfte auf das Werkstück, und zwar auch dann nicht, wenn die Drehachse des Dreh-Herzes nicht exakt mit derjenigen der Spindel übereinstimmt.

Wegen des notwendigen Montage- und Demontage-Vorganges eignen sich solche einfachen Lösungen jedoch schlecht für eine automatisierte Produktion. Für viele Anwendungen ist das Dreh-Herz daher durch ein schwimmend gelagertes, sogenanntes Ausgleichsfutter ersetzt worden, dessen Backen bis zu einigen Millimetern exzentrisch zu ihrem Antrieb rotieren können. Solche Backen können eine Aussenfläche des Werkstückes auch dann greifen und antreiben, wenn diese Aussenfläche nicht zentrisch zu der durch die Spitzen bestimmten Rotationsachse des Werkstükkes ist. Wegen des relativ hohen Gewichtes des Futters entstehen dabei allerdings Unwuchten, die für hohe Drehzahlen kompensiert werden müssen, was die Herstellungskosten von Ausgleichsfuttern wesentlich erhöht. Wie etwa aus dem US-Patent 3 344 695, das den nächstliegenden Stand der Technik für die Ansprüche 1 und 7 darstellt, oder der französischen Patentschrift 2 175 995 ersichtlich, ist es aus praktischen Gründen fast notwendig, die zum Greifen des Werkstückes oder zum Vorspannen von dafür vorgesehenen Federn nötigen, relativ hohen Kräfte zunächst in achsialer Richtung auf das Spannfutter zu übertragen, und sie danach - mechanisch und/oder hydraulisch - innerhalb des Futters in die zum Spannen der Zange notwendige radiale Richtung umzulenken. Wenn die Haltekräfte durch vorgespannte Federn erzeugt werden, etwa durch Schraubenfedern wie im genannten US-Patent 3 344 695, sind diese ausgerichtet, um parallel zur Drehachse zu wirken, d.h. um durch achsparallele Kräfte vorgespannt zu werden und nach Aufhebung derselben ebenfalls in achsialer Richtung wirkende Kräfte auszuüben. Dadurch werden Sperrigkeit, Gewicht und Kosten des Futters nochmals vergrössert.

Vielfach ist auf der Maschine bereits ein konventionelles (zentrisch spannendes) Dreibackenfutter vorhanden, welches beim Spannen zwischen Zentrierspitzen durch ein Ausgleichsfutter ersetzt werden muss. Für den Spannaufsatz ist daher eine Lösung erwünscht, die weitgehend das geringe Gewicht sowie die mechanische Einfachheit eines Dreh-Herzes aufweist, und dennoch leicht auf halb- oder voll-automatischen Anlagen einsetzbar ist ohne die Verwendung eines Ausgleichsfutters zu verlangen. Zu diesem Zweck ist die Erfindung wie in den Hauptansprüchen 1 und 7 beschrieben, definiert.

Die Erfindung ermöglicht die Verwendung herkömmlicher Futter sowie leichter und preisgünstiger Spannaufsätze die entweder durch Öffnen oder durch Schliessen des Futters vorgespannt werden können, was auf einfache Weise eine automatisierte Produktion ermöglicht. In bevorzugten Ausführungsformen können die von aussen an den Spannaufsatz angelegten Vorspannkräfte den Federn des Spannaufsatzes direkt entgegenwirken, was einen besonders kompakten Aufbau gestattet und Reibungsverluste in zwischengeschalteten Mechanismen für die Umlenkung oder Paralellverschiebung der Vorspannkräfte im Spannaufsatz vermeidet.

Im Folgenden soll die Erfindung anhand der Beschreibung von Ausführungs-Beispielen und mit Hilfe der Zeichnung näher erläutert werden. Es zeigt:
Figur 1 eine schematische, zur Drehachse eines Werkstückes senkrechte Ansicht eines einfachen erfindungsgemässen Spannaufsatzes mit drei Auflagepunkten, der auf einem Werkstück montiert ist;
Figur 2 eine analoge, weiter vereinfachte Ansicht eines erfindungsgemässen Spannaufsatzes mit nur zwei Auflagepunkten, und
Figur 3 eine entsprechende Ansicht einer weiteren, durch Zug vorspannbaren Ausführungsform mit drei Auflagepunkten.

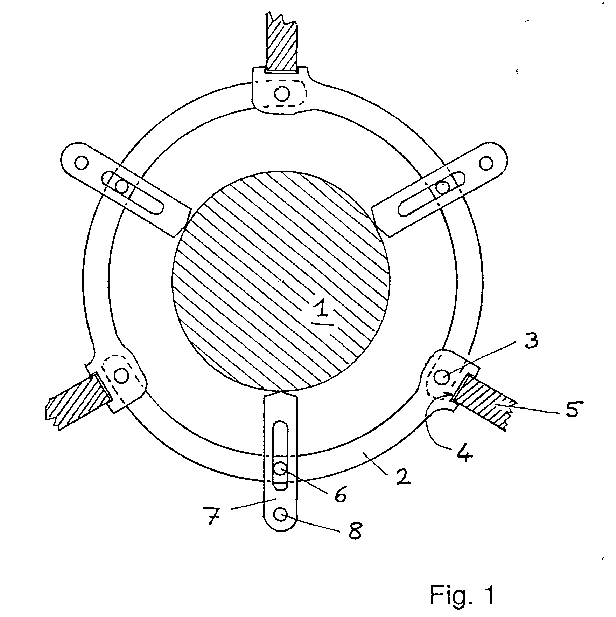

Der Klarheit halber wurden bei allen Darstellungen an sich notwendige Teile weggelassen sofern sie dem Praktiker wohlbekannt, und für das Verständnis der Erfindung unwesentlich sind. Zudem sind bei Vorrichtungen mit 120° Teilung dreifach vorhandenen Teile nur einmal mit einer Bezugsziffer versehen, und zur besseren Unterscheidung ist das Werkstück jeweils im Schnitt dargestellt. Um das mechanische Prinzip der Erfindung zu veranschaulichen, zeigt die Figur 1 eine stark schematisierte Ansicht einer einfachen, auf zwei verschiedene Arten vorspannbaren Ausführung des erfindungsgemässen Spannaufsatzes.

In der Figur 1 bezeichnet 1 das im Schnitt gesehene Werkstück, auf dem der Spannaufsatz montiert ist. Dessen Hauptbestandteile sind drei annähernd in Form von Kreissegmenten gebogene Bänder 2 aus Federstahl deren Dicke in der Zeichenebene vorzugsweise kleiner ist, als senkrecht dazu. Die Bänder 2 sind an ihren Enden paarweise durch Gelenke 3 mit zur Zeichenebene senkrechten Achsen verbunden und bilden zusammen ein ungefähr kreisförmiges Gebilde. Jedes Band weist an einem seiner Enden einen aussenliegenden, offenen Sitz 4 auf, um je eine Backe 5 des (nicht gezeigten) Spannfutters der Werkzeugmaschine aufzunehmen. Diese Sitze können, wie weiter unten beschrieben, verschiedene Breiten und/oder Tiefen aufweisen.

Etwa in der Mitte der konkaven Seite jedes Bandes ist ein Loch 6 zum Anschrauben eines nach innen ragenden, und mit einem Langloch versehenen Abstandsstükkes 7 vorgesehen. Mittels einer (nicht gezeigten) durch das Langloch und das Loch 6 durchgeführten Schraube kann das Abstandsstück 7 in einstellbarer Weise auf dem Band 2 befestigt werden. Die Einstellung erfolgt so, dass der Spannaufsatz nur auf das Werkstück passt, wenn die Bänder 2 in der Mitte leicht nach aussen gebogen werden, d.h. wenn sie eine grössere Krümmung aufweisen, als im ungespannten Zustand. Dimension und Einstellung der Abstandsstücke 7 sind so gewählt, dass sie, wenn keine äusseren Kräfte auf den Spannaufsatz wirken durch die Bänder 2 kräftig genug auf das Werkstück gedrückt werden, um das für die Bearbeitung nötige Drehmoment schlupffrei zu übertragen. Es können auch andere Verstellmöglichkeiten vorgesehen sein um die Anpassung des Spannaufsatzes an verschieden dimensionierte Werkstücke zu verbessern, insbesondere können die Gelenke 3 als Exzenter mit zur Drehachse des Werkstückes parallelen Achsen ausgebildet sein.

Solange kein Werkstück eingesetzt ist, halten die in den Sitzen 4 eingreifenden Backen 5 des Spannfutters den Spannaufsatz in der gewünschten Lage. Zur Einführung des Werkstückes wird das Spannfutter angezogen bis der Einwärtsdruck der Backen 5 die Bänder entgegen ihrer Federkraft hinreichend nach aussen biegt, um Platz für das Werkstück zu schaffen. Nachdem dieses eingeführt ist, wird das Futter gelöst bis die Abstandsstücke 7 den Spannaufsatz auf dem Werkstück 1 festhalten und die Bakken 5 weit genug vom Boden der Sitze 4 entfernt sind, um bei drehendem Futter keine merkliche radiale Kraft auf den Spannaufsatz auszuüben, und zwar auch dann nicht, wenn die Drehachse der Werkstückes (und somit des Spannaufsatzes) nicht exakt mit derjenigen des Futters übereinstimmt.

Bei hohen Ansprüchen an die Winkelgenauigkeit kann zur Übertragung eines Drehmomentes vom Futter auf den Spannaufsatz ein spezielles (nicht gezeigtes) Organ vorgesehen sein, etwa in der Form eines auf dem Futter angebrachten Fingers der in einen entsprechenden Schlitz des Spannaufsatzes eingreift, um diesen mitzunehmen. Es kann diese Aufgabe aber auch von einer Backe des Spannfutters übernommen werden. Um diese Backe eindeutig zu bestimmen wird ihr Sitz 4 schmäler als die beiden anderen ausgeführt, so dass sie beim Ansetzen eines Drehmomentes vor den beiden anderen an einer Seitenfläche ihres Sitzes zum Anschlag kommt. Ein ähnlicher Effekt kann erreicht werden, indem die Seitenwände eines Sitzes höher ausgebildet werden, als die der anderen, so dass die führende Backe noch im Eingriff mit ihrem Sitz steht, wenn das Futter weit genug gelöst wurde, um die anderen Backen aus ihren Sitzen zu befreien. Nach erfolgter Bearbeitung des Werkstückes 1 wird es vom Spannaufsatz befreit, indem das Futter wieder stark genug angezogen wird, um die Bänder 2 entgegen ihrer Federkraft so weit durchzubiegen, dass die Abstandsstücke 7 das Werkstück freigeben.

Die eben beschriebene, einfache Funktionsweise der Erfindung wird angewandt, wenn die Backen des Spannfutters nicht ausgebildet sind, um eine radial nach aussen gerichtete Kraft zu übertragen. Falls das Spannfutter jedoch solche Kräfte entweder über seine Backen oder über speziell dafür vorgesehene Aufsatzbacken übertragen kann, werden die Bänder 2 mit Vorteil durch radial nach aussen gerichtete Kräfte vorgespannt. Hierzu weist jedes Zwischenstück 7 ein Loch 8 auf in welches ein (nicht gezeigter) Bolzen eingreift, der entweder auf den Backen oder auf speziellen Aufsatzbacken des Spannfutters geschraubt ist. Jeder Bolzen wirkt mit dem zugehörigen Loch 8 auf ähnliche Weise zusammen, wie die Backen 5 und die offenen Sitze 4 in der Ausführung mit einem nur auf Druck arbeitenden Futter, mit dem Unterschied, dass die Vorspannung jetzt durch nach aussen gerichteten Zug anstatt durch nach innen gerichtetem Druck erzeugt wird. Zwischen jedem Bolzen und dem zugehörigen Loch besteht ein gewisses Spiel, das beispielsweise zwischen 1/10 mm und 2 mm betragen kann. Dadurch kann bei passender Einstellung der Futterbacken die Übertragung unerwünschter radialer Kräfte auf das Werkstück bei seiner Bearbeitung auch dann vermieden werden, wenn die Drehachsen dieser beiden Teile nicht exakt übereinstimmen. Im Interesse einer genau definierten Winkelstellung des Werkstückes bei der Bearbeitung kann ein Loch 8 kleiner ausgeführt sein, als die anderen, um sicherzustellen, dass die Übertragung des Drehmomentes stets über dieses Loch und den zugehörigen Bolzen geschieht.

Die 120° Teilung der bisher beschriebenen Varianten stellt wegen ihrer konstruktiven Einfachheit und der weiten Verbreitung von Dreibackenfutter eine bevorzugte Ausführungsform der Erfindung dar, es kann aber fallweise vorteilhaft sein, eine grössere oder kleinere Anzahl von Federn zu verwenden, deren Vorspannung fallweise über Zwischenhebel anstatt direkt in Richtung der Backenbewegung erfolgen kann. Auch Form und Art der Federn sowie ihrer Verankerung kann stark variieren. Die gezeigte Kreisform wurde hauptsächlich zur Vereinfachung der Darstellung gewählt, denn es kann jede Feder aus einer passend geformten Spange bestehen. Im Grenzfall kann nur eine einzige, als geschlossene Spange ausgebildete Feder vorgesehen sein, wie im nächsten Beispiel beschrieben.

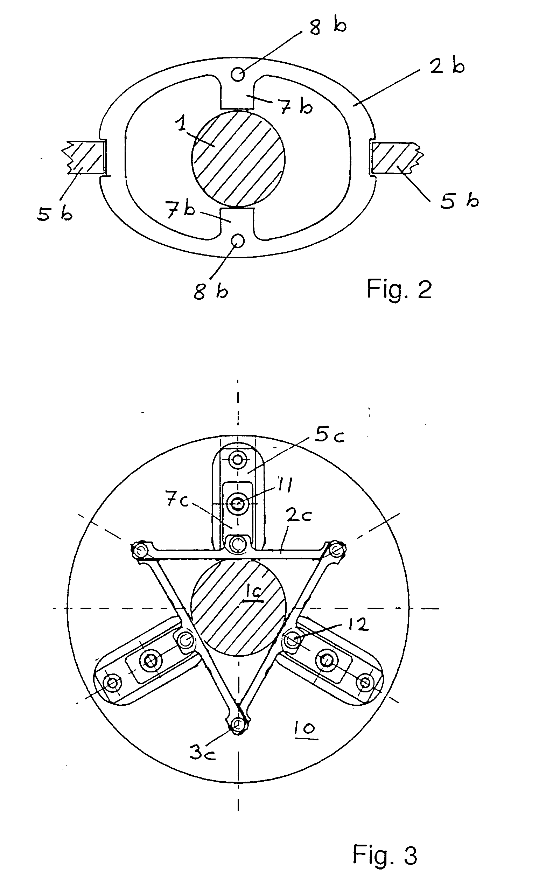

Die Figur 2 zeigt schematisch das mechanische Prinzip einer für ein Zweibackenfutter geeigneten Ausführung eines erfindungsgemässen Spannaufsatzes mit einer einzigen elliptischen Feder 2b. Die Teile 7b dieser Feder entsprechen den Abstandsstücken 7 der Figur 1, sind jedoch einstückig mit der Feder 2b ausgebildet. Der Aufbau des Spannaufsatzes wird dadurch vereinfacht, und seine Sperrigkeit verringert, was trotz mangelnder Verstellmöglichkeit für die Bearbeitung einer grossen Serie gleich dimensionierter Werkstücke in Frage kommen kann. Es können jedoch die Teile 7b auch in Form auswechselbarer Zwischenbacken ausgeführt sein. Die Backen 5b des (nicht gezeigten) Zweibackenfutters arbeiten in ähnlicher Weise wie die Backen 5 der Figur 1 um die Feder vorzuspannen, was hier durch einwärts gerichteten Druck längs der grosse Achse der elliptischen Feder geschieht. Es ist ohne weiteres ersichtlich, das ein einwärts gerichteter Druck der Backen 5b auf die Blattfeder 2b die Teile 7b der Feder genügend auseinandertreiben kann, um das Werkstück 1 zu befreien. Dasselbe kann durch einen an den Löchern 8b angreifenden, auswärts gerichteten Zug längs der kleinen Achse der Ellipse erreicht werden. Die Übertragung des Drehmomentes der Werkzeugmaschine auf den Spannaufsatz, und damit auf das Werkstück 1, erfolgt ebenfalls ähnlich wie in den vorangehenden Beispielen.

Figur 3 zeigt eine etwas detailliertere achsiale Ansicht einer bevorzugten Ausführung des erfindungsgemässen Spannaufsatzes für ein Spannfutter mit 120° Teilung und Backen die radial nach aussen gerichtete Kräfte ausüben können. Den anderen Ausführungsformen entsprechende Teile tragen dieselbe Ziffer mit dem zusätzlichen Buchstaben "c"; im Gegensatz zu den vorangehenden Figuren ist hier die Vorderseite des Spannfutters 10 angedeutet. Der Klarheit halber sind die in 120° Teilung dreifach vorhandenen Teils nur einmal mit einer Bezugsziffer versehen. Die Federkraft für das Fassen des Werkstückes 1 wird durch drei im wesentlichen gerade Balken 2c aus Federstahl geliefert, deren Enden paarweise durch Bolzen 3c verbunden sind. Auf jeder Backe 5c des Dreibakkenfutters 10 ist ein Aufsatzbacken 7c mit einem Bolzen 11 angeschraubt. Der Aufsatzbacken trägt einen Gewindebolzen 12 welcher in einem in der Mitte des zugeordneten Balkens 2c vorgesehenen Loch steckt, wobei zwischen diesem Loch und dem Gewindebolzen 12 mindestens in radialer Richtung ein gewisses Spiel besteht, wie in analoger Weise in den vorhergehenden Beispielen beschrieben. Wie im Fall der elliptischen Feder greift hier das federnde Element direkt am Werkstück an, besitzt aber dafür keine speziellen, den Teilen 7b der Figur 2 entsprechend geformten Teile. Zur Anpassung an verschiedene Werkstücke können die Enden der Balken durch (nicht gezeigte) exzentrisch einstellbare Gelenke verbunden sein.

Die Dimensionen sind so gewählt, dass bei geraden, nicht vorgespannten Balken das Futter "betätigt", d.h. nicht voll geöffnet ist und gleichzeitig die Abstände zwischen den Balken etwas kleiner als die entsprechenden Dimensionen des Werkstückes sind, auf dem der Spannaufsatz befestigt werden soll. Wird nun das Spannfutter weiter geöffnet, fahren die Gewindebolzen 12 auf Anschlag und biegen danach die Balken in ihrer Mitte nach aussen, beispielsweise um 2.5 mm. Das Werkstück hat nun genügend Platz, um zwischen Spitzen aufgenommen zu werden. Danach wird das Spannfutter wieder in die betätigte Position gefahren, bis die Balken am Werkstück anliegen, wobei die Balken noch etwas (beispielsweise um 2 mm) durchgebogen bleiben sollen, um die erforderliche Spannkraft zu erzeugen. Die Backen werden weiter gefahren, bis die Gewindebolzen 12 etwa in der Mitte der zugehörigen Löcher sitzen, so dass das Spiel zwischen Bolzen und Löcher eine Übertragung radialer Kraftkomponenten vom antreibenden Futter auf den angetriebenen Spannaufsatz (und damit auf das Werkstück) auch dann verhindert, wenn die Drehachse des letzteren nicht exakt mit derjenigen des Futters übereinstimmt. Nun kann die Bearbeitung beginnen; wenn nötig kann dafür gesorgt werden, dass die Momentübertragung nur über einen bestimmten der drei Gewindebolzen 12 erfolgt, indem man diesem in seinem Loch weniger Spiel in tangentialer Richtung gibt, als der anderen Gewindebolzen. Nach erfolgter Bearbeitung wird die Verbindung zwischen Spannaufsatz und Werkstück durch Öffnen der Futters wieder gelöst.

## Patentansprüche

1. Verfahren um einen, zur Übertragung des Drehmomentes einer Werkzeugmaschine auf ein zwischen Spitzen eingespanntes Werkstück vorgesehenen Spannaufsatz durch die Kraft mindestens einer Feder des Spannaufsatzes auf dem Werkstück zu befestigen und um ihn von diesem zu lösen, **dadurch gekennzeichnet, dass** man einen radial zur Drehachse des Werkstückes wirkenden Mechanismus des Spannfutters der Werkzeugmaschine verwendet, um mindestens eine Befestigungsfeder des Spannaufsatzes vorzuspannen.

2. Verfahren nach Anspruch 1, **dadurch gekennzeichnet, dass** man den Mechanismus des Spannfutters verwendet, um Vorspannkräfte auf den Spannaufsatz zu übertragen, die je mit der von einer Feder des Spannaufsatzes ausgeübten Kraft fluchten.

3. Verfahren nach einem der Ansprüche 1 oder 2, **dadurch gekennzeichnet, dass** man den Öffnungs/ Schliessmechanismus des Spannfutters verwendet, um die Vorspannkräfte zu übertragen.

4. Verfahren nach einem der Ansprüche 1 bis 3, **dadurch gekennzeichnet, dass** man mindestens eine Feder (2, 2b) vorspannt, indem man radial zur Drehachse des Werkstückes wirkende, einwärts gerichtete Kräfte vom Futter (5, 5b) auf den Spannaufsatz überträgt.

5. Verfahren nach einem der Ansprüche 1 bis 3, **dadurch gekennzeichnet, dass** man mindestens eine Feder (2c) vorspannt, indem man radial zur Drehachse des Werkstückes wirkende, auswärts gerichtete Kräfte vom Futter (5c) auf den Spannaufsatz überträgt.

6. Verfahren nach einem der vorangehenden Ansprüche, **dadurch gekennzeichnet, dass** man den Moment zwischen dem Spannfutter und dem Spannaufsatz mit einem genügenden radialen Spiel überträgt, um einen Antrieb des Spannaufsatzes durch das Futter ohne Übertragung radialer Kräfte zu bewirken wenn die Drehachsen dieser Teile um ein bestimmtes Mass voneinander abweichen.

7. Spannaufsatz für die Ausführung des Verfahrens nach Anspruch 1, mit mindestens einer der Befestigung des Spannaufsatzes auf dem Werkstück dienenden Feder (2, 2b, 2c), **dadurch gekennzeichnet, dass** diese eingerichtet ist, um durch im wesentlichen radial zur Drehachse der Werkzeugmaschine gerichtete Kräfte vorgespannt zu werden, und um bei montiertem Aufsatz, nach Aufhebung der Vorspannkräfte, im wesentlichen radial zur Drehachse des Werkstückes (1, 1c) gerichtete Kräfte auszuüben.

8. Spannaufsatz nach Anspruch 7, **dadurch gekennzeichnet, dass** er durch radial nach aussen gerichtete Kräfte vorspannbar ist (Fig. 3).

9. Spannaufsatz nach Anspruch 7, **dadurch gekennzeichnet, dass** er durch radial nach innen gerichtete Kräfte vorspannbar ist (Fig. 1, 2).

10. Spannaufsatz nach einem der Ansprüche 7 bis 9, **dadurch gekennzeichnet, dass** mindestens eine Feder ein federnder Balken (2c) oder eine federnde Spange (1b) ist.

11. Spannaufsatz nach einem Anspruch 10, **gekennzeichnet durch** mehrere, paarweise **durch** Gelenke (3, 3c) verbundene, federnde Balken (2c) oder Spangen (2).

12. Spannaufsatz nach Anspruch 11, **dadurch gekennzeichnet dass** die Gelenke (3, 3c) exzentrisch einstellbar sind, um den Abstand zwischen den federnden Teilen zu verändern.

13. Spannaufsatz nach einem der Ansprüche 7 bis 12, mit Übertragungsorganen um die vom Spannfutter erzeugten Vorspannkräfte auf die Feder zu übertragen, **dadurch gekennzeichnet, dass** die Übertragungsorgane eingerichtet sind, um mit radialen Spiel mit einem kraftübertragenden Organ des Spannfutters zusammengekoppelt zu werden, wobei dieses Spiel genügt, um bei einer in Abhängigkeit des Durchmessers des Werkstückes bestimmten Öffnung des Spannfutters im wesentlichen nur tangentiale Kräfte auf den Spannaufsatz zu übertragen solange die Drehachsen von Spannfutter und Spannaufsatz um weniger als einen bestimmten Betrag voneinander abweichen.

14. Spannaufsatz nach Anspruch 13, **dadurch gekennzeichnet, dass** ein Übertragungsorgan eingerichtet ist, um mit einem geringeren tangentialen Spiel als alle anderen mit dem zugehörigen kraftübertragenden Organ des Spannfutters zusammengekoppelt zu werden, derart dass bei drehendem Futters nur dieses eine Übertragungsorgan einen Drehmoment auf den Spannaufsatz überträgt.

## Claims

1. Method for fixing, through the action of at least one gripping spring, a clamping attachment on a workpiece spanned between centres on a machine tool in order to transmit a torque from the machine tool to the workpiece via the clamping attachment, and for releasing the latter from the workpiece, **characterized in that** a mechanism of the chuck of the machine tool is used for pre-tensioning at least one gripping spring of the clamping attachment.

2. Method according to claim 1, **characterized in that** one uses the mechanism of the chuck for transmitting pre-tensioning forces to the clamping attachment, each of these forces being aligned with a force exerted by a spring of the clamping attachment.

3. Method according to one of claims 1 or 2, **characterized in that** the pre-tensioning forces are transmitted through the opening/closing mechanism of the chuck.

4. Method according to any of claims 1 - 3, **characterized in that** at least one spring (2, 2b) is pre-tensioned by forces exerted by the chuck (5, 5b) on the clamping attachment and directed radially inwards toward the rotation axis of the workpiece.

5. Method according to any of claims 1 - 3, **characterized in that** at least one spring (2, 2b) is pre-tensioned by forces exerted by the chuck (5, 5b) on the clamping attachment and directed radially outwards away from the rotation axis of the workpiece.

6. Method according to any preceding claim, **characterized in that** one transmits the torque from the chuck to the clamping attachment with enough radial play to urge the clamping attachment by the chuck without generating radial forces when the rotation axes of these two elements differ to a certain extent.

7. Clamping attachment for performing the method of claim 1, with at least one spring (2, 2b, 2c) for fixing the clamping attachment on the workpiece, **characterized in that** this spring is shaped so as to be pre-tensioned by forces that are essentially oriented radially with respect to the rotation axis of the workpiece, and so as to exert forces that are essentially directed radially inwards with respect to the rotation axis of the workpiece when the clamping attachment is in its working position and the pre-tensioning forces are removed.

8. Clamping attachment according to claim 7, **characterized in that** the spring is designed so as to be pre-tensioned by outwardly directed radial forces (Fig. 3).

9. Clamping attachment according to claim 7, **characterized in that** the spring is designed so as to be pre-tensioned by inwardly directed radial forces (Fig. 1, 2).

10. Clamping attachment according to any of claims 7 to 9, **characterized in that** at least one spring is an elastic bar (2c) or an elastic loop (1b).

11. Clamping attachment according to claim 10, **characterized by** several elastic bars (2c) or loops (2) linked pairwise by articulations (3, 3c).

12. Clamping attachment according to claim 11, **characterized in that** the articulations (3, 3c) are adjustable through eccentric means, in order to vary the distance between the elastic parts.

13. Clamping attachment according to any of claims 7 - 12, with transmission means for transmitting to the spring the pre-tensioning forces generated by the chuck, **characterized in that** said transmission means are connectable to a force-transmitting device of the chuck with a radial allowance that is sufficient to transmit essentially only tangential forces to the clamping attachment when the rotation axes of the chuck and of the clamping attachment differ by less than a certain amount, given an aperture of the chuck determined by the diameter of the workpiece.

14. Clamping attachment according to claim 13, **characterized in that** one of its transmission means is connected with the corresponding transmission element of the chuck with a smaller tangential clearance than all others, such that when the chuck rotates only this particular transmission means transmits a torque to the clamping attachment.

## Revendications

1. Procédé pour fixer un toc, par la force d'au moins un ressort lui appartenant, sur une pièce à usiner maintenue entre deux pointes afin de transmettre à la pièce un couple produit par une machine-outil, ainsi que pour séparer le toc de la pièce, **caractérisé en ce que** l'on utilise un mécanisme appartenant au mandrin de la machine-outil pour prétensionner au moins un ressort de fixation du toc.

2. Procédé selon la revendication 1, **caractérisé en ce qu'**on utilise le mécanisme du mandrin pour transmettre au toc des forces de prétension dont chacune est alignée avec une force exercée par un ressort du toc.

3. Procédé selon la revendication 1 ou 2, **caractérisé en ce que** l'on utilise le mécanisme d'ouverture et de fermeture du mandrin pour transmettre les forces de prétension.

4. Procédé selon une des revendications 1 à 3, **caractérisé en ce que** l'on prétensionne au moins un ressort (2,2b) en transmettant du mandrin (5,5b) au toc des forces orientées radialement vers l'intérieur par rapport à l'axe de rotation de la pièce à usiner.

5. Procédé selon une des revendications 1 à 3, **caractérisé en ce que** l'on prétensionne au moins un ressort (2c) en transmettant du mandrin (5c) au toc des forces orientées radialement vers l'extérieur par rapport à l'axe de rotation de la pièce à usiner.

6. Procédé selon une des revendications 1 à 5, **caractérisé en ce que** l'on transmet le couple du mandrin au toc avec un jeu radial suffisant pour entraîner le toc par le mandrin sans provoquer des forces radiales lorsque les axes de rotation de ces deux pièces diffèrent dans une certaine mesure.

7. Toc pour la réalisation du procédé selon la revendication 1, avec au moins un ressort (2,2b,2c) servant à fixer le toc sur la pièce à usiner, **caractérisé en ce que** le ressort est agencé de façon à être prétensionné par des forces essentiellement orientées radialement par rapport à l'axe de rotation de la machine-outil, et de manière à exercer, lorsque le toc est monté sur la pièce à usiner et que les forces de prétensionnement sont supprimées, des forces dirigées essentiellement en direction radiale par rapport à l'axe de rotation de la pièce à usiner (1,1c).

8. Toc selon la revendication 7, **caractérisé en ce qu'**il peut être prétensionné par des forces dirigées radialement vers l'extérieur (Fig. 3).

9. Toc selon la revendication 7, **caractérisé en ce qu'**il peut être prétensionné par des forces dirigées radialement vers l'intérieur (Fig. 1,2).

10. Toc selon une des revendications 7 à 9, **caractérisé en ce qu'**au moins un ressort est une barre (2c) ou une agrafe (2b) élastique.

11. Toc selon la revendication 10, **caractérisé en ce qu'**il comporte plusieurs barres (2c) ou agrafes (2) élastiques réunies deux à deux par des articulations (3,3c).

12. Toc selon la revendication 11, **caractérisé en ce que** les articulations (3,3c) sont ajustables par excentrique pour régler la distance entre les éléments élastiques.

13. Toc selon une des revendications 7 à 12, avec des organes de transmission pour transmettre au ressort les forces de prétensionnement exercées par le mandrin, **caractérisé en ce que** les organes de transmission sont agencés pour coopérer avec un certain jeu radial avec un élément de transmission de force correspondant du mandrin, ce jeu étant suffisant pour ne transmettre, pour une ouverture du mandrin déterminée en fonction du diamètre de la pièce à usiner, essentiellement que des forces tangentielles sur le toc tant que les axes de rotation du mandrin et du toc ne diffèrent que dans une certaine mesure.

14. Toc selon la revendication 13, **caractérisé en ce qu'**un organe de transmission est agencé pour être accouplé avec l'élément de transmission correspondant du mandrin avec un jeu tangentiel inférieur à celui de tous les autres organes de transmission, de manière à ce qu'uniquement cet organe de transmission transmette un couple au toc lors de la rotation du mandrin.
